# EUROPÄISCHE PATENTANMELDUNG

(11) **EP 4 668 420 A1**
(43) Veröffentlichungstag der Anmeldung: **24.12.2025**
(21) Anmeldenummer: 24183235.1
(22) Anmeldetag: 19.06.2024
(51) Int. Cl.: H01M 50/103, H01M 50/119, H01M 50/133, H01M 50/136, H01M 50/342, H01M 10/04, B21C 37/08, B21C 37/15

(54) **VERFAHREN FÜR EINE PROFILIERANLAGE, GESCHLOSSENES PROFIL GEMÄSS DEM VERFAHREN UND GEHÄUSE MIT DEM GESCHLOSSENEN PROFIL**

(71) Anmelder: Fischer Edelstahlrohre GmbH, 77855 Achern-Fautenbach (DE)
(72) Erfinder: MÜLLER, Mike, 77876 Kappelrodeck (DE); MAIRA, Jérôme, 67470 Seltz (FR); SCHWEIZER, Marc, 77855 Achern (DE)
(74) Vertreter: Gesthuysen Patentanwälte

(57) **Zusammenfassung**

Dargestellt und beschrieben ist ein Verfahren für eine Profilieranlage (1) zur Herstellung eines geschlossenen Profils (2) für ein dichtes Gehäuse (3) für eine elektrische Zelle. Die Profilieranlage (1) weist eine Prägevorrichtung (4), eine erste Stanzvorrichtung (5), eine erste Fügevorrichtung (8), eine zweite Fügevorrichtung (9), eine Profiliervorrichtung (10) und eine Trennvorrichtung (11) auf.

Aufgabe der vorliegenden Erfindung ist die Angabe eines Verfahrens für die Profilieranlage (1) zur Herstellung eines geschlossenen Profils (2) mit einem Überdruckventil, welches kostengünstiger als im Stand der Technik herstellbar ist oder zumindest eine Alternative darstellt.

Die Aufgabe ist durch ein Verfahren mit den folgenden Schritten gelöst: Einprägen einer Sollberststelle (26) durch die Prägevorrichtung (4) in ein Berstmetallband (21) zur Zwangsentlüftung bei einem Berstdruck. Stanzen einer Öffnung (27) durch die erste Stanzvorrichtung (5) in ein Profilmetallband (22) mit einer ersten Bandkante (24) und einer zweiten Bandkante (25) passend zur Sollberststelle (26). Stoffschlüssiges Fügen des Profilmetallbands (22) und des Berstmetallbands (21) aufeinander durch die zweite Fügevorrichtung (9), sodass die Sollberststelle (26) und die Öffnung (27) im Profilmetallband (22) passend zueinander sind. Rollformen des Profilmetallbands (22) in ein Profil durch die Profiliervorrichtung (10). Stoffschlüssiges Fügen der ersten Bandkante (24) und der zweiten Bandkante (25) des rollgeformten Profils miteinander durch die erste Fügevorrichtung (8), wodurch das Profil geschlossen wird. Ablängen des zuvor geschlossenen Profils auf eine Länge durch die Trennvorrichtung (11), wodurch das geschlossene Profil (2) entsteht.

## Beschreibung

Die Erfindung betrifft zunächst ein Verfahren für eine Profilieranlage zur Herstellung eines geschlossenen Profils für ein dichtes Gehäuse für eine elektrische Zelle.

Das geschlossene Profil ist demnach für ein dichtes Gehäuse geeignet und das dichte Gehäuse ist für eine elektrische Zelle geeignet. Das Gehäuse weist für die Eignung einen Gehäuseinnenraum auf, der für die Aufnahme eines elektrischen Energiespeichers geeignet ist. Der Energiespeicher ist zum Beispiel ein Akkumulator auf Basis von Lithium-Verbindungen. Eine elektrische Zelle weist also ein Gehäuse auf. Das Gehäuse weist ein geschlossenes Profil und einen Gehäuseinnenraum auf. Der Gehäuseinnenraum wird zumindest teilweise durch das geschlossene Profil gebildet. Im Gehäuseinnenraum ist ein elektrischer Energiespeicher angeordnet.

Im Betrieb der elektrischen Zelle kann es vorkommen, dass durch den Energiespeicher ein Gas im Gehäuseinnenraum entsteht. Ein Gas kann bei einem Akkumulator auf Basis von Lithium-Verbindungen zu Beispiel durch ein thermisches Durchgehen entstehen. Da das Gehäuse dicht ist, kann das Gas aus dem Gehäuseinnenraum nicht in einen Außenraum entweichen, weshalb das Gas im Gehäuseinnenraum einen Gasdruck aufbaut, der die Zelle beschädigen oder sogar zerstören kann. Zum Beispiel deformiert das Gas durch den Gasdruck das Gehäuse oder bringt es sogar zum Platzen.

Aus dem Stand der Technik sind verschiedene Verfahren für eine Profilieranlage zur fortlaufenden Herstellung eines geschlossenen Profils bekannt. Für ein bekanntes Verfahren weist die Profilieranlage eine Profiliervorrichtung und eine Fügevorrichtung auf. Gemäß dem Verfahren wird in einem Schritt durch die Profiliervorrichtung ein Profilmetallband mit einer ersten Bandkante und einer zweiten Bandkante in ein Profil rollgeformt. In einem weiteren Schritt werden durch die Fügevorrichtung die erste Bandkante und die zweite Bandkante des Profils miteinander gefügt, wodurch das Profil geschlossen wird und das geschlossene Profil entsteht.

Aus dem Stand der Technik ist bekannt, ein separates Überdruckventil in ein solches Gehäuse einzubauen, welches ein Gas im Gehäuseinnenraum abführt, wenn ein Gasdruck des Gases einen Grenzdruck überschreitet. Das Einbauen erfolgt zum Beispiel durch Schweißen, Kleben oder Verpressen. Das Überdruckventil und sein Einbau sind mit zusätzlichen Kosten und Verfahrensschritten bei der Herstellung des Gehäuses verbunden.

Aufgabe der Vorliegenden Erfindung ist die Angabe eines Verfahrens für eine Profilieranlage zur Herstellung eines geschlossenen Profils mit einem Überdruckventil, welches kostengünstiger als im Stand der Technik herstellbar ist oder zumindest eine Alternative darstellt.

Die Aufgabe ist durch ein Verfahren für eine Profilieranlage mit den Merkmalen von Anspruch 1 gelöst. Die Profilieranlage weist eine Prägevorrichtung, eine erste Stanzvorrichtung, eine erste Fügevorrichtung, eine zweite Fügevorrichtung, eine Profiliervorrichtung und eine Trennvorrichtung auf.

Die Profilieranlage führt fortlaufend die folgenden Schritte aus:
- In einem Schritt wird durch die Prägevorrichtung eine Sollberststelle in ein Berstmetallband zur Zwangsentlüftung bei einem Berstdruck eingeprägt. An der Sollberststelle ist eine Dicke des Berstmetallbands geringer als eine Dicke des Berstmetallbands außerhalb der Sollberststelle, sodass das Berstmetallband an der Sollberststelle mechanisch geschwächt ist. Wenn ein Gas einen Gasdruck auf die Sollberststelle ausübt und der Gasdruck einen Berstgasdruck erreicht, dann birst die Sollberststelle, sodass das Gas entweicht. In diesem Sinne ist die Sollberststelle ein Überdruckventil.
- In einem weiteren Schritt wird durch die erste Stanzvorrichtung eine Öffnung in ein Profilmetallband mit einer ersten Bandkante und einer zweiten Bandkante passend zur Sollberststelle gestanzt. Die erste und die zweite Bandkante liegen einander gegenüber. Passend bedeutet hier, dass die Öffnung im Profilmetallband das Bersten der Sollberststelle nicht verhindert.
- In einem weiteren Schritt werden durch die zweite Fügevorrichtung das Profilmetallband und das Berstmetallband stoffschlüssig aufeinandergefügt, sodass die Sollberststelle und die Öffnung im Profilmetallband passend zueinander sind. Passend bedeutet hier, dass das Gas durch die geborstene Sollberststelle und die Öffnung im Profilmetallband entweichen kann.
- In einem weiteren Schritt wird durch die Profiliervorrichtung das Profilmetallband in ein Profil rollgeformt. Vorzugsweise erfolgt das Einprägen der Sollberststelle vor dem Rollformen des Profils. Rollformen ist eine Endlosfertigung von Profilen wie diesem.
- In einem weiteren Schritt werden durch die erste Fügevorrichtung die erste Bandkante und die zweite Bandkante des rollgeformten Profils miteinander stoffschlüssig gefügt, wodurch das Profil geschlossen wird.
- In einem weiteren Schritt wird durch die Trennvorrichtung das zuvor geschlossene Profil abgelängt, wodurch das geschlossene Profil entsteht. Die Trennvorrichtung ist vorzugsweise eine fliegende Trennvorrichtung.

Die vorstehenden Schritte beschreiben die Herstellung eines Stücks, also eines geschlossenen Profils. Die Schritte des Verfahrens werden zum Beispiel in der aufgeführten Reihenfolge ausgeführt. Da das Verfahren fortlaufend ausgeführt wird, wozu insbesondere auch das fortlaufende Zuführen der Metallbänder gehört, wird eine Mehrzahl der geschlossenen Profile hergestellt. Die Metallbänder sind hier das Berstmetallband und das Profilmetallband.

Wenn bei einer elektrischen Zelle mit einem dichten Gehäuse, welches das geschlossene Profil aufweist, im Gehäuseinnenraum ein Gas einen Gasdruck aufbaut und der Gasdruck den Berstgasdruck erreicht, dann birst die Sollberststelle und entweicht das Gas aus dem Gehäuseinnenraum in einen Außenraum.

Dem vorstehenden Verfahren voraus geht die Erkenntnis, dass sich das geschlossene Profil eines dichten Gehäuses besonders gut für eine kostengünstige Herstellung eines Überdruckventils eignet.

Die Erfindung gemäß dem vorstehend beschriebenen Verfahren stellt im Vergleich zum Stand der Technik ein effizientes und kostengünstiges Verfahren bereit, ein geschlossenes Profil für ein dichtes Gehäuses mit einem Überdruckventil für eine elektrische Zelle herzustellen. Auch ist das Verfahren schneller als das aus dem Stand der Technik bekannte.

Da die Schritte des Verfahrens fortlaufend ausgeführt werden, werden auch das Berstmetallband und das Profilmetallband fortlaufend zugeführt. Dafür weist die Profilieranlage vorzugsweise eine erste Abwickelhaspel mit einem Coil des Berstmetallbands und eine zweite Abwickelhaspel mit einem Coil des Profilmetallbands auf.

Vorzugsweise weist die Profilieranlage eine erste Bandspeichervorrichtung auf und wird das Berstmetallband in dieser zwischengespeichert, um das fortlaufende Ausführen des Verfahrens auch beim Ausrüsten der ersten Abwickelhaspel mit einer neuen Coil des Berstmetallbands zu gewährleisten. Vorzugsweise weist die Profilieranlage auch eine zweite Bandspeichervorrichtung auf und wird das Profilmetallband in dieser zwischengespeichert, um das fortlaufende Ausführen des Verfahrens auch beim Ausrüsten der zweiten Abwickelhaspel mit einer neuen Coil des Profilmetallbands zu gewährleisten.

Vorzugsweise weist die Profilieranlage eine erste Bandrichtvorrichtung auf und wird das Berstmetallband in dieser gerichtet. Vorzugsweise weist die Profilieranlage eine zweite Bandrichtvorrichtung auf und wird das Profilmetallband in dieser gerichtet. Ein Metallband, wie zum Beispiel das Berstmetallband und das Profilmetallband, weist nach dem Abwickeln von einer Abwickelhaspel unterschiedliche Welligkeiten und mechanische Eigenspannungen auf, welche Abweichungen nach einem Rollformen bewirken können. Diese Welligkeiten und Eigenspannungen werden in einer Bandrichtvorrichtung durch mehrfaches Biegen in entgegengesetzte Richtungen abgebaut.

In einer Ausgestaltung wird von der zweiten Fügevorrichtung zum stoffschlüssigen Fügen ein Laserschweißverfahren oder ein Klebeverfahren ausgeführt. Vorzugsweise erfolgt das Fügen beim Laserschweißverfahren ohne Schweißzusatzstoffe.

Die Aufgabe ist auch durch ein Verfahren für eine Profilieranlage mit den Merkmalen von Anspruch 3 gelöst. Die Profilieranlage weist eine Profiliervorrichtung, eine erste Fügevorrichtung, eine Prägevorrichtung und eine Trennvorrichtung auf.

Die Profilieranlage führt fortlaufend die folgenden Schritte aus:
- In einem Schritt wird durch die Profiliervorrichtung ein Profilmetallband mit einer ersten Bandkante und einer zweiten Bandkante in ein Profil rollgeformt.
- In einem weiteren Schritt werden durch die erste Fügevorrichtung die erste Bandkante und die zweite Bandkante des rollgeformten Profils miteinander stoffschlüssig gefügt, wodurch das Profil geschlossen wird.
- In einem weiteren Schritt wird durch die Prägevorrichtung eine Sollberststelle in das Profilmetallband zur Zwangsentlüftung bei einem Berstdruck eingeprägt.
- In einem weiteren Schritt wird durch die Trennvorrichtung das zuvor geschlossene Profil abgelängt, wodurch das geschlossene Profil entsteht.

Die Erfindung gemäß dem vorstehend beschriebenen Verfahren stellt im Vergleich zum Stand der Technik ein effizientes und kostengünstiges Verfahren bereit, ein geschlossenes Profil für ein dichtes Gehäuses mit einem Überdruckventil für eine elektrische Zelle herzustellen. Im Vergleich zum zuvor beschriebenen Verfahren gemäß Anspruch 1 ist dieses Verfahren insbesondere aufgrund des fehlenden Berstmetallbands einfacher und schneller und damit kostengünstiger, jedoch auf auch eingeschränkter. Denn während im Verfahren gemäß Anspruch 1 das Berstmetallband ausschließlich nach seiner Eignung für das Bersten ausgewählt werden kann, kann im Verfahren gemäß Anspruch 3 das Profilmetallband nicht nur nach seinen Eigenschaften für das Bersten, sondern muss auch nach seinen Eigenschaften für das Profil ausgewählt werden. Die Schritte des Verfahrens werden zum Beispiel in der aufgeführten Reihenfolge ausgeführt. Im Übrigen gelten die Ausführungen für das Verfahren gemäß Anspruch 1 entsprechend für das Verfahren gemäß Anspruch 3 und umgekehrt.

In einer Ausgestaltung des Verfahrens wird das Einprägen der Sollberststelle in das Profilmetallband nach dem stoffschlüssigen Fügen ausgeführt.

In einer Ausgestaltung wird das Einprägen der Sollberststelle in das Profilmetallband nach dem Ablängen des geschlossenen Profils ausgeführt.

Alternativ dazu wird die Reihenfolge des letzten und des vorletzten Schritts vertauscht.

In einer weiteren Ausgestaltung wird als das Berstmetallband ein Metallband mit einer Dicke zwischen 0,05 mm und 1 mm und vorzugsweise einer Breite zwischen 8 mm und 50 mm verwendet.

In einer weiteren Ausgestaltung wird als das Profilmetallband ein Metallband mit einer Dicke zwischen 0,2 mm und 2 mm, vorzugsweise zwischen 0,3 mm und 0,8 mm, und vorzugsweise mit einer Breite von mehr als 100 mm verwendet. Die Breite entspricht einem Abstand der ersten Bandkante und der zweiten Bandkante voneinander.

In einer weiteren Ausgestaltung besteht zumindest eines der Metallbänder aus einem Aluminium, einem Stahl oder einem Edelstahl. Zum Beispiel handelt es sich um einen nickel- oder aluminiumplattierten Stahl.

In einer weiteren Ausgestaltung wird von der ersten Fügevorrichtung zum stoffschlüssigen Fügen ein Laserschweißverfahren oder ein Klebeverfahren ausgeführt. Vorzugsweise erfolgt das Fügen bei Laserschweißverfahren ohne Schweißzusatzstoffe.

In einer weiteren Ausgestaltung wird das Einprägen der Sollberststelle auf einer Außenseite durchgeführt. Die Außenseite grenzt and den Außenraum.

In einer weiteren Ausgestaltung wird der Berstdruck durch eine Tiefe des Einprägens der Sollberststelle eingestellt.

In einer weiteren Ausgestaltung hat die Einprägung der Sollberststelle eine Form einer Linie. Die Linie kann verschiedene alternative Ausgestaltungen aufweisen.

In einer ersten der alternativen Ausgestaltung gabelt sich die Linie an beiden Enden auf. Durch diese Form ergibt sich beim Bersten eine besonders große Öffnung, durch welche das Gas besonders schnell entweicht.

In einer zweiten der alternativen Ausgestaltungen hat die Linie eine Form von zwei gleichschenkligen Trapezen. Dabei weisen die gleichschenkligen Trapeze eine längere und eine kürzere Grundseite auf und haben die kürzere Grundseite gemein.

In einer dritten der alternativen Ausgestaltungen ist die Linie in ein erstes, zweites, drittes, viertes und fünftes Segment unterteilt. Also grenzt unmittelbar das zweite an das erste, das dritte an das zweite, das vierte an das dritte und das fünfte an das vierte Segment. Das erste Segment, das dritte Segment und das fünfte Segment sind gerade. Das zweite Segment und das vierte Segment sind gekrümmt. Das erste Segment und das fünfte Segment sind parallel zueinander und einander gegenüberliegend. Das dritte Segment liegt zwischen dem ersten Segment und dem fünften Segment. Das dritte Segment und das erste Segment spannen einen Winkel auf. Das dritte Segment und das fünfte Segment spannen diesen Winkel ebenfalls auf. Folglich ist das dritte Segment in Bezug auf das erste Segment und das fünfte Segment diagonal. Die Enden der Linie frei sind.

In einer weiteren Ausgestaltung weist das geschlossene Profil eine prismatische, vorzugsweise rechteckige, Form auf. Vorzugsweise weist es eine Breite zwischen 20 mm und 60 mm und eine Höhe zwischen 100 mm und 150 mm auf. Auch eine zylindrische Form, vorzugsweise mit einer kreisrunden Querschnittskontur, ist möglich.

In einer weiteren Ausgestaltung liegt die Länge des geschlossenen Profils zwischen 200 mm und 1500 mm. Vorzugsweise wird eine trockenes Schneidmesser von der Trennvorrichtung zum Ablängen verwendet. Mit einem solchen werden geringe Verschmutzungen und gratfreie Schnittkanten erreicht.

Das geschlossene Profil weist ein erstes und ein zweites offenes Ende auf, die einander gegenüberliegen, und wird bei der Herstellung des geschlossenen Gehäuses und somit auch der Herstellung einer elektrischen Zelle verwendet. Bei der Herstellung der elektrischen Zelle und somit auch des geschlossenen Gehäuses wird ein elektrischer Energiespeicher im Gehäuseinnenraum angeordnet und werden das erste und zweite offene Ende verschlossen. Das Verschließen erfolgt zum Beispiel mit Metallblechen, welche aus dem gleichen Material sind wie das Profilmetallband. Die Metallbleche und das geschlossene Profil werden zum Beispiel durch ein Laserschweißverfahren stoffschlüssig am ersten und zweiten offenen Ende miteinander verbunden.

Die Aufgabe ist auch durch ein geschlossenes Profil mit den Merkmalen von Anspruch 15 gelöst. Das geschlossene Profil ist dadurch gekennzeichnet, dass es gemäß einem der zuvor beschriebenen Verfahren hergestellt ist.

Die Aufgabe ist auch durch ein dichtes Gehäuse für eine elektrische Zelle mit den Merkmalen von Anspruch 16 gelöst. Das dichte Gehäuse ist dadurch gekennzeichnet, dass es das zuvor beschriebene geschlossene Profil aufweist.

Die Ausführungen für die Verfahren gelten entsprechend für das geschlossene Profil und auch für das dichte Gehäuse.

Im Einzelnen ist eine Vielzahl von Möglichkeiten gegeben, die Verfahren, das geschlossene Profil und das dichte Gehäuse auszugestalten und weiterzubilden. Dazu wird verwiesen sowohl auf die den unabhängigen Ansprüchen nachgeordneten Ansprüche als auch auf die nachfolgende Beschreibung von bevorzugten Ausführungsbeispielen in Verbindung mit der Zeichnung. In der Zeichnung zeigt
- Figur 1: wesentliche Komponenten einer ersten Profilieranlage,
- Figur 2: einen Ablaufplan eines ersten Verfahrens für die erste Profilieranlage zur Herstellung eines ersten geschlossenen Profils,
- Figur 3: eine Visualisierung von Schritten des ersten Verfahrens,
- Figur 4: einen Längsschnitt,
- Figur 5: eine Darstellung des ersten geschlossenen Profils,
- Figur 6: wesentliche Komponenten einer zweiten Profilieranlage,
- Figur 7: einen Ablaufplan eines zweiten Verfahrens für die zweite Profilieranlage zur Herstellung eines zweiten geschlossenen Profils,
- Figur 8: eine Darstellung des zweiten geschlossenen Profils,
- Figur 9: eine Darstellung eines dichten Gehäuses,
- Figur 10: eine erste Alternative einer Sollberststelle und
- Figur 11: eine zweite Alternative einer Sollberststelle.

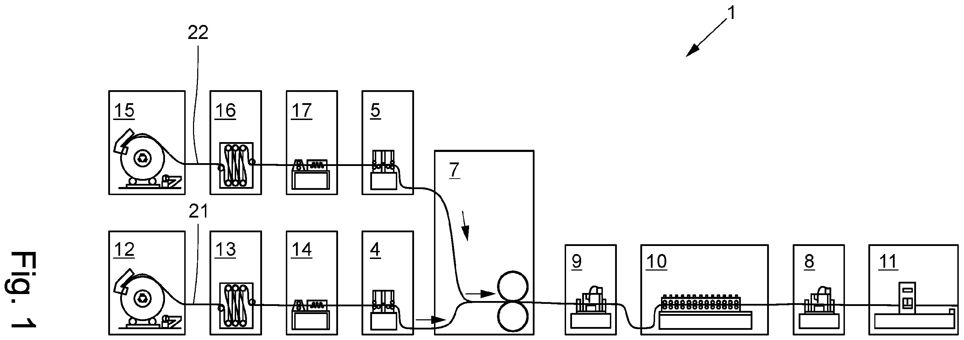

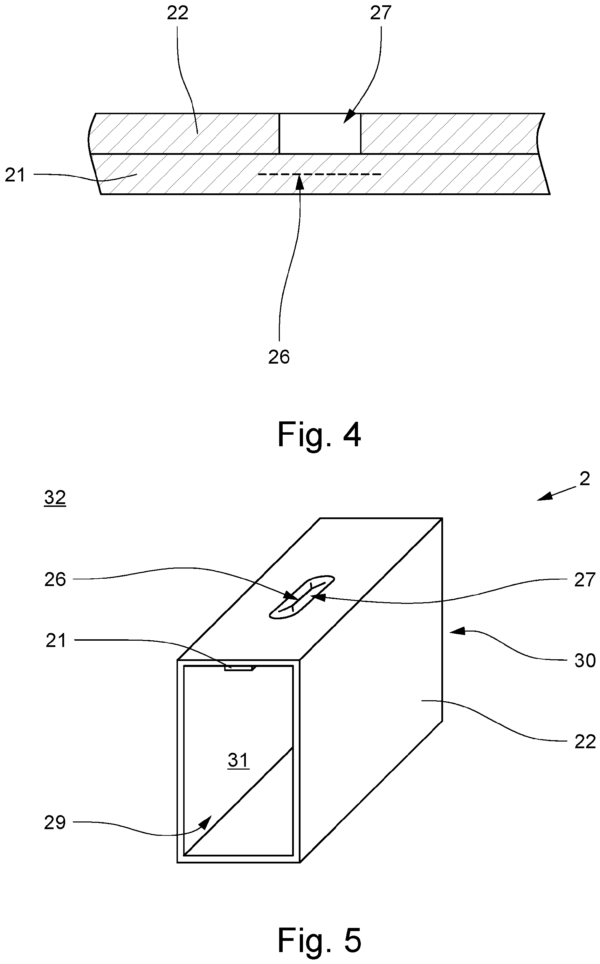

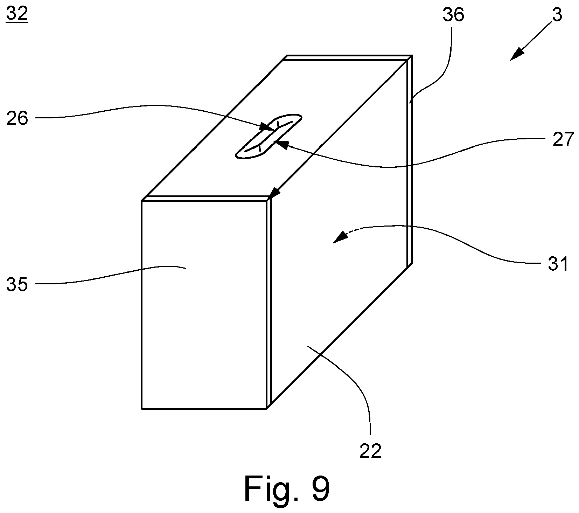

Figur 1 zeigt wesentliche Komponenten einer ersten Profilieranlage 1 in einer abstrahierten und symbolischen Weise. Sie ist zur Herstellung eines ersten geschlossenen Profils 2, siehe Figur 5, für ein dichtes Gehäuse 3, siehe Figur 9, für eine elektrische Zelle ausgebildet. Für diesen Zweck weist sie eine Prägevorrichtung 4, eine erste Stanzvorrichtung 5, eine Führungsvorrichtung 7, eine erste Fügevorrichtung 8, eine zweite Fügevorrichtung 9, eine Profiliervorrichtung 10 und eine fliegende Trennvorrichtung 11 auf.

Weiter weist die erste Profilieranlage 1 eine erste Abwickelhaspel 12, eine erste Bandspeichervorrichtung 13, eine erste Bandrichtvorrichtung 14, eine zweite Abwickelhaspel 15, eine zweite Bandspeichervorrichtung 16 und eine zweite Bandrichtvorrichtung 17 auf.

Die erste Profilieranlage 1 ist im Betrieb. Deshalb ist die erste Abwickelhaspel 12 mit einem Berstmetallband 21 bestückt, welches zunächst der ersten Bandspeichervorrichtung 13 und dann der ersten Bandrichtvorrichtung 14 zugeführt wird. Es weist eine Breite von ca. 20 mm und eine Dicke von ca. 0,4 mm auf. Weiter ist die zweite Abwickelhaspel 15 mit einem Profilmetallband 22 bestückt, welches zunächst der zweiten Bandspeichervorrichtung 16 und dann der zweiten Bandrichtvorrichtung 17 zugeführt wird. Es weist eine Breite von ca. 260 mm und eine Dicke von ca. 0,6 mm auf. Das Berstmetallband 21 und das Profilmetallband 22 sind Metallbänder aus einem Aluminium. Das Profilmetallband 22 weist eine erste Bandkante 24 und eine zweite Bandkante 25 auf, die parallel zueinander sind und einen Abstand voneinander in Höhe der Breite, also von ca. 260 mm haben. Die Abwickelhaspeln, die Bandspeichervorrichtungen und die Bandrichtvorrichtungen sind identisch ausgebildet, jedoch auf das jeweilige Metallband eingestellt.

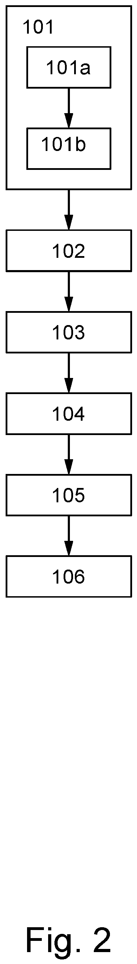

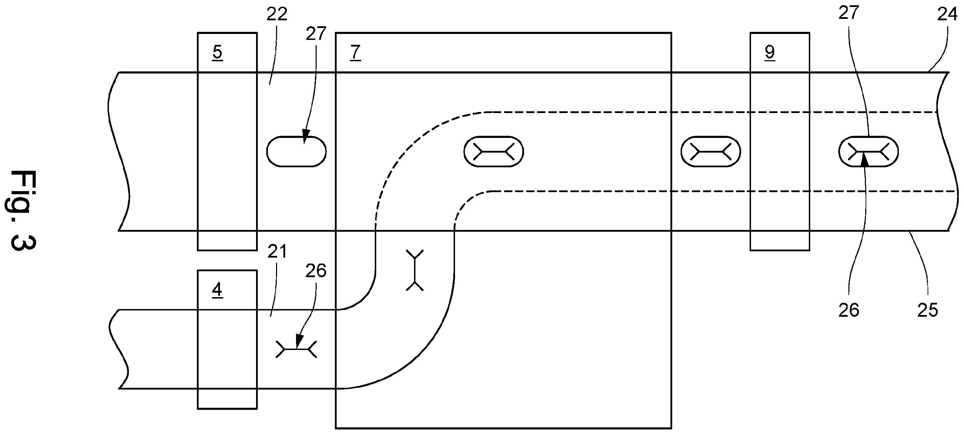

Die erste Profilieranlage 1 führt fortlaufend mit dem gerichteten Berstmetallband 21 und dem gerichteten Profilmetallband 22 ein im Folgenden beschriebenes erstes Verfahren zur Herstellung des ersten geschlossenen Profils 2 für das dichte Gehäuse 3 für eine elektrische Zelle aus. Figur 2 zeigt einen Ablaufplan mit den Schritten des ersten Verfahrens und Figur 3 visualisiert Schritte des ersten Verfahrens in einer abstrahierten und symbolischen Weise.

In einem ersten Schritt 101 werden die folgenden Teilschritte zeitgleich ausgeführt:
In einem ersten Teilschritt 101a des ersten Schritts 101 wird von der Prägevorrichtung 4 in das Berstmetallband 21 zur Zwangsentlüftung bei einem Berstdruck eine Sollberststelle 26 eingeprägt. Die Sollberststelle 26 hat eine Form einer Linie, wobei sich die Linie an beiden Enden aufgabelt. Der Berstdruck wird durch eine Tiefe des Einprägens der Sollberststelle 26 eingestellt. Wenn ein Gas einen Gasdruck auf die Sollberststelle 26 ausübt und der Gasdruck einen Berstgasdruck erreicht, dann birst die Sollberststelle 26, sodass das Gas entweicht.

In einem zweiten Teilschritt 101b wird von der ersten Stanzvorrichtung 5 in das Profilmetallband 22 eine Öffnung 27 passend zur Sollberststelle 26 gestanzt.

In einem zweiten Schritt 102 werden von der Führungsvorrichtung 7 das Berstmetallband 21 mit der eingeprägten Sollberststelle 26 und das Profilmetallband 22 mit der gestanzten Öffnung 27 zusammengeführt, sodass die Öffnung 27 im Profilmetallband 22 um die Sollberststelle 26 im Berstmetallband 21 angeordnet ist. Das wird unter passend verstanden. Figur 4 zeigt einen Längsschnitt, in dem die passende Anordnung der Metallbänder dargestellt ist. Mit anderen Worten ist die Öffnung 27 des Profimetallbands 22 über der Sollberststelle 26 des Berstmetallbands 21 angeordnet.

In einem dritten Schritt 103 werden von der zweiten Fügevorrichtung 9 das Berstmetallband 21 und das Profilmetallband 22 stoffschlüssig aufeinandergefügt, sodass die Sollberststelle 26 und die Öffnung 27 im Profilmetallband 22 passend zueinander sind. Von der zweiten Fügevorrichtung 9 wird zum stoffschlüssigen Fügen ein Laserschweißverfahren umgesetzt.

In einem vierten Schritt 104 wird von der Profiliervorrichtung 10 das Profilmetallband 22 in ein Profil rollgeformt. Grundsätzlich weist das Profil eine prismatische Form auf. Hier handelt es sich um eine rechteckige Form.

In einem fünften Schritt 105 werden von der ersten Fügevorrichtung 8 die erste Bandkante 24 und die zweite Bandkante 25 des Profilmetallbands 22 stoffschlüssig miteinander gefügt, wodurch das rollgeformte Profil geschlossen wird. Auch von der ersten Fügevorrichtung 8 wird zum stoffschlüssigen Fügen ein Laserschweißverfahren umgesetzt.

In einem sechsten Schritt 106 wird von der fliegenden Trennvorrichtung 11 das zuvor geschlossene Profil auf eine Länge abgelängt, wodurch das erste geschlossene Profil 2 entsteht, siehe Figur 5. Die Länge beträgt 200 mm.

Die vorstehenden Schritte beschreiben die Herstellung eines Stücks des ersten geschlossenen Profils 2. Da das Verfahren fortlaufend ausgeführt wird, wozu insbesondere auch das fortlaufende Zuführen der Metallbänder gehört, wird eine Mehrzahl der ersten geschlossenen Profile 2 hergestellt.

Figur 5 zeigt das erste geschlossene Profil 2 in einer perspektivischen Darstellung schematisch und symbolhaft. Es hat eine rechteckige Form mit einer Breite von ca. 30 mm und einer Höhe von ca. 100 mm. Ein Umfang beträgt folglich ca. 260 mm, was der Breite des Profilmetallbands 22 entspricht. Schließlich hat es eine Länge von 200 mm.

Das erste geschlossene Profil 2 weist ein erstes offenes Ende 29 und ein zweites offenes Ende 30 auf, die einander gegenüberliegen. Das erste geschlossene Profil 2 bildet einen Teil eines Gehäuseinnenraums 31 des dichten Gehäuses 3. Das Berstmetallband 21 ist auf einer Seite des Profilmetallbands 22 angeordnet, welche dem Gehäuseinnenraum 31 zugewendet ist. Die andere Seite des Profilmetallbands 22 ist einem Außenraum 32 zugewendet.

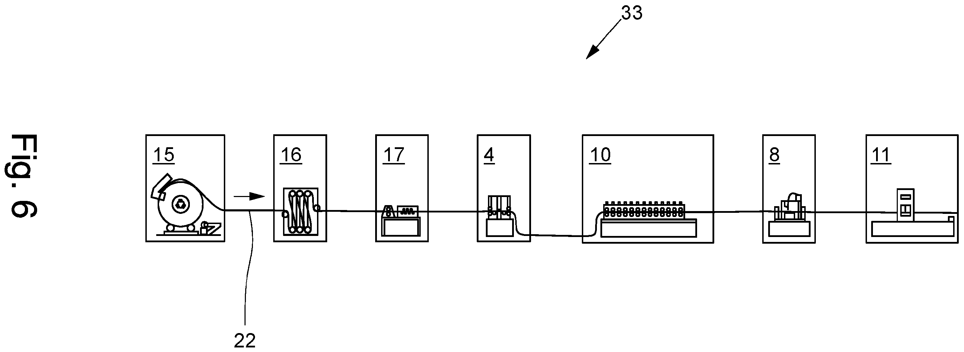

Figur 6 zeigt wesentlichen Komponenten einer zweiten Profilieranlage 33. Sie ist zur Herstellung eines zweiten geschlossenen Profils 34 für das dichte Gehäuse 3 ausgebildet. Für diesen Zweck weist sie eine Profiliervorrichtung 10, eine erste Fügevorrichtung 8, eine Prägevorrichtung 4 und eine fliegende Trennvorrichtung 11 auf.

Weiter weist die zweite Profilieranlage 29 eine zweite Abwickelhaspel 15, eine zweite Bandspeichervorrichtung 16 und eine zweite Bandrichtvorrichtung 17 auf.

Die zweite Profilieranlage 33 ist ebenfalls im Betrieb. Deshalb ist die zweite Abwickelhaspel 15 mit einem Profilmetallband 22 bestückt, welches zunächst der zweiten Bandspeichervorrichtung 16 und dann der zweiten Bandrichtvorrichtung 17 zugeführt wird. Es weist eine Breite von ca. 260 mm und eine Dicke von 0,6 mm auf. Das Profilmetallband 22 weist eine erste Bandkante 24 und eine zweite Bandkante 25 auf, die parallel zueinander sind und einen Abstand voneinander in Höhe der Breite, also von 260 mm haben.

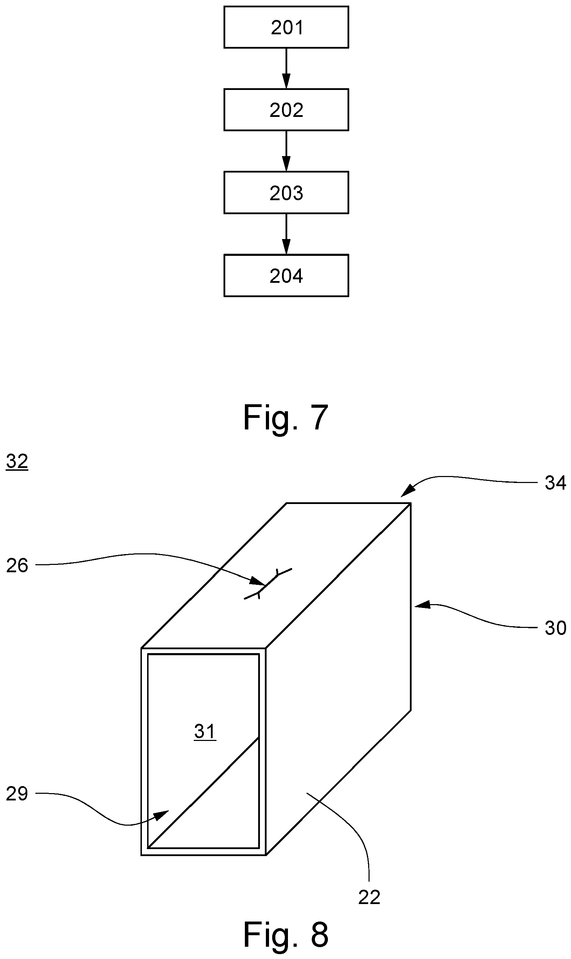

Die zweite Profilieranlage 33 führt fortlaufend mit dem gerichteten Profilmetallband 22 ein im Folgenden beschriebenes zweites Verfahren zur Herstellung des zweiten geschlossenen Profils 34 für das dichte Gehäuse 3 aus. Figur 7 zeigt einen Ablaufplan mit den Schritten des zweiten Verfahrens.

In einem ersten Schritt 201 wird von der Prägevorrichtung 4 in das Profilmetallband 22 zur Zwangsentlüftung bei einem Berstdruck eine Sollberststelle 26 eingeprägt. Die Sollberststelle 26 hat eine Form einer Linie, wobei sich die Linie an beiden Enden aufgabelt. Der Berstdruck wird durch eine Tiefe des Einprägens der Sollberststelle 26 eingestellt.

In einem zweiten Schritt 202 wird von der Profiliervorrichtung 10 das Profilmetallband 22 in ein Profil rollgeformt. Grundsätzlich weist das Profil eine prismatische Form auf. Hier handelt es sich um eine rechteckige Form.

In einem dritten Schritt 203 werden von der ersten Fügevorrichtung 8 die erste Bandkante 24 und die zweite Bandkante 25 des Profilmetallbands 22 stoffschlüssig miteinander gefügt, wodurch das rollgeformte Profil geschlossen wird.

In einem vierten Schritt 204 wird von der fliegenden Trennvorrichtung 11 das zuvor geschlossene Profil auf eine Länge abgelängt, wodurch das zweite geschlossene Profil 34 entsteht, siehe Figur 8. Die Länge beträgt 200 mm.

Figur 8 zeigt das zweite geschlossene Profil 34 in einer perspektivischen Darstellung schematisch und symbolhaft. Es hat eine rechteckige Form mit einer Breite von ca. 30 mm und einer Höhe von ca. 100 mm. Ein Umfang beträgt folglich ca. 260 mm, was der Breite des Profilmetallbands 22 entspricht. Schließlich hat es eine Länge von 200 mm. Auch das zweite geschlossene Profil 34 weist ein erstes offenes Ende 29 und ein zweites offenes Ende 30 auf, die einander gegenüberliegen.

Im Übrigen gelten die Ausführungen zum ersten Verfahren und zur ersten Profilieranlage 1 entsprechend für das zweite Verfahren und die zweite Profilieranlage 33.

Figur 9 zeigt das dichte Gehäuse 3 für eine elektrische Zelle in einer perspektivischen Darstellung schematisch und symbolhaft. In diesem Ausführungsbeispiel weist es das erste geschlossene Profil 2 auf. Darüber hinaus weist das dichte Gehäuse 3 noch ein erstes Metallblech 35 passend auf das erste offene Ende 29 und ein zweites Metallblech 36 passend auf das zweite offene Ende 30 auf. Sie sind aus dem gleichen Material wie das Profilmetallband 22. Das erste Metallblech 35 ist stoffschlüssig mit dem Profilmetallband 22 am ersten offenen Ende 29 und das zweite Metallblech 36 ist stoffschlüssig mit dem Profilmetallband 22 am zweiten offenen Ende 30 verbunden. Zum stoffschlüssigen Verschließen wird ein Laserschweißverfahren umgesetzt.

Wenn ein Gas im Gehäuseinnenraum 31 einen Gasdruck aufbaut und der Gasdruck den Berstgasdruck erreicht, dann birst die Sollberststelle 26 und entweicht das Gas aus dem Gehäuseinnenraum 31 in den Außenraum 32.

In einem anderen Ausführungsbeispiel weist das dichte Gehäuse 3 statt des ersten geschlossenen Profils 2 das zweite geschlossene Profil 34 auf. Die Ausführungen zum Ausführungsbeispiel mit dem ersten geschlossenen Profil 2 gelten entsprechend.

Die Linie der Sollberststelle 26 kann auch alternative Formen aufweisen.

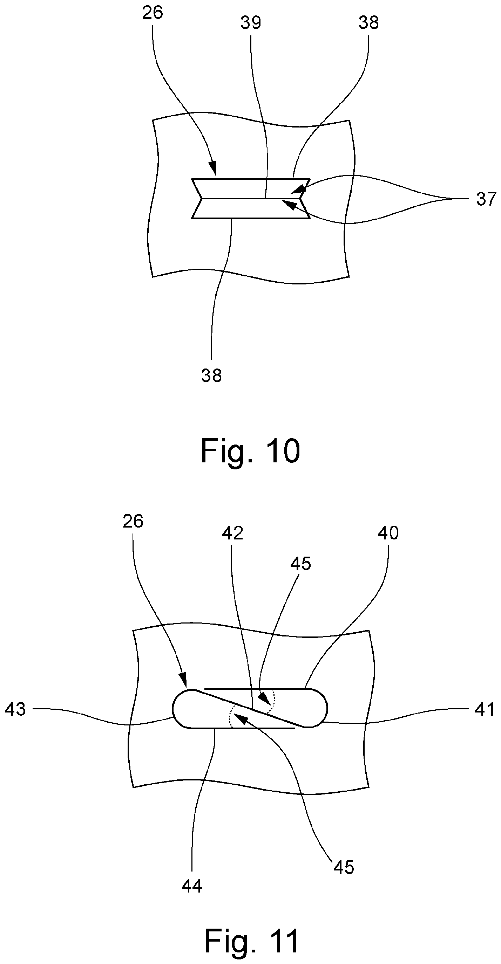

Figur 10 zeigt eine erste Alternative. In dieser hat die Linie eine Form von zwei gleichschenkligen Trapezen 37. Dabei weisen die gleichschenkligen Trapeze 37 eine längere Grundseite 38 und eine kürzere Grundseite 39 auf fallen die kürzeren Grundseiten 39 zusammen.

Figur 11 zeigt eine zweite Alternative. In dieser ist die Linie in ein erstes Segment 40, zweites Segment 41, drittes Segment 42, viertes Segment 43 und fünftes Segment 44 unterteilt. Es ist ersichtlich, dass das zweite Segment 41 an das erste Segment 40, das dritte Segment 42 an das zweite Segment 41, das vierte Segment 43 an das dritte Segment 42 und das fünfte Segment 44 an das vierte Segment 43 grenzt. Das erste Segment 40, das dritte Segment 42 und das fünfte Segment 44 sind gerade. Das zweite Segment 41 und das vierte Segment 43 sind gekrümmt. Das erste Segment 40 und das fünfte Segment 44 sind parallel zueinander und einander gegenüberliegend. Das dritte Segment 42 liegt zwischen dem ersten Segment 40 und dem fünften Segment 44. Das dritte Segment 42 und das erste Segment 40 spannen einen Winkel 45 auf. Das dritte Segment 42 und das fünfte Segment 44 spannen diesen Winkel 45 ebenfalls auf. Die Winkel 45 sind durch gekrümmte Strichlinien kenntlich gemacht. Folglich ist das dritte Segment 42 in Bezug auf das erste Segment 40 und das fünfte Segment 44 diagonal. Die Enden der Linie frei sind. Die Linie ist also nicht geschlossen.

### Bezugszeichen

1 erste Profilieranlage
2 erstes geschlossenes Profil
3 dichtes Gehäuse
4 Prägevorrichtung
5 erste Stanzvorrichtung
7 Führungsvorrichtung
8 erste Fügevorrichtung
9 zweite Fügevorrichtung
10 Profiliervorrichtung
11 fliegende Trennvorrichtung
12 erste Abwickelhaspel
13 erste Bandspeichervorrichtung
14 erste Bandrichtvorrichtung
15 zweite Abwickelhaspel
16 zweite Bandspeichervorrichtung
17 zweite Bandrichtvorrichtung
21 Berstmetallband
22 Profilmetallband
24 erste Bandkante
25 zweite Bandkante
26 Sollberststelle
27 Öffnung im Profilmetallband
29 erstes offenes Ende eines geschlossenen Profils
30 zweites offenes Ende eines geschlossenen Profils
31 Gehäuseinnenraum
32 Außenraum
33 zweite Profilieranlage
34 zweites geschlossenes Profil
35 erstes Metallblech
36 zweites Metallblech
37 Trapez
38 längere Grundseite des Trapezes
39 kürzere Grundseite des Trapezes
40 erstes Segment
41 zweites Segment
42 drittes Segment
43 viertes Segment
44 fünftes Segment
45 Winkel

## Patentansprüche

1. Verfahren für eine Profilieranlage (1) zur Herstellung eines geschlossenen Profils (2) für ein dichtes Gehäuse (3) für eine elektrische Zelle,
wobei die Profilieranlage (1) eine Prägevorrichtung (4), eine erste Stanzvorrichtung (5), eine erste Fügevorrichtung (8), eine zweite Fügevorrichtung (9), eine Profiliervorrichtung (10) und eine Trennvorrichtung (11) aufweist,
wobei von der Profilieranlage (1) fortlaufend die folgenden Schritte ausgeführt werden:
- Einprägen einer Sollberststelle (26) durch die Prägevorrichtung (4) in ein Berstmetallband (21) zur Zwangsentlüftung bei einem Berstdruck,
- Stanzen einer Öffnung (27) durch die erste Stanzvorrichtung (5) in ein Profilmetallband (22) mit einer ersten Bandkante (24) und einer zweiten Bandkante (25) passend zur Sollberststelle (26),
- stoffschlüssiges Fügen des Profilmetallbands (22) und des Berstmetallbands (21) aufeinander durch die zweite Fügevorrichtung (9), sodass die Sollberststelle (26) und die Öffnung (27) im Profilmetallband (22) passend zueinander sind,
- Rollformen des Profilmetallbands (22) in ein Profil durch die Profiliervorrichtung (10),
- stoffschlüssiges Fügen der ersten Bandkante (24) und der zweiten Bandkante (25) des rollgeformten Profils miteinander durch die erste Fügevorrichtung (8), wodurch das Profil geschlossen wird und
- Ablängen des zuvor geschlossenen Profils auf eine Länge durch die Trennvorrichtung (11), wodurch das geschlossene Profil (2) entsteht.

2. Verfahren nach Anspruch 1, wobei von der zweiten Fügevorrichtung (9) zum stoffschlüssigen Fügen ein Laserschweißverfahren oder ein Klebeverfahren ausgeführt wird.

3. Verfahren für eine Profilieranlage (33) zur Herstellung eines geschlossenen Profils (34) für ein dichtes Gehäuse (3) für eine elektrische Zelle,
wobei die Profilieranlage (33) eine Profiliervorrichtung (10), eine erste Fügevorrichtung (8), eine Prägevorrichtung (4) und eine Trennvorrichtung (11) aufweist,
wobei von der Profilieranlage (33) fortlaufend die folgenden Schritte ausgeführt werden:
- Rollformen von einem Profilmetallband (22) mit einer ersten Bandkante (24) und einer zweiten Bandkante (25) in ein Profil durch die Profiliervorrichtung,
- stoffschlüssiges Fügen der ersten Bandkante (24) und der zweiten Bandkante (25) des rollgeformten Profils miteinander durch die erste Fügevorrichtung (8), wodurch das Profil geschlossen wird,
- Einprägen einer Sollberststelle (26) durch die Prägevorrichtung (4) in das Profilmetallband (22) zur Zwangsentlüftung bei einem Berstdruck und
- Ablängen des zuvor geschlossenen Profils auf eine Länge durch die Trennvorrichtung (11), wodurch das geschlossene Profil (34) entsteht.

4. Verfahren nach Anspruch 3, wobei das Einprägen der Sollberststelle (26) nach dem stoffschlüssigen Fügen ausgeführt wird.

5. Verfahren nach Anspruch 3 oder 4, wobei wird das Einprägen der Sollberststelle (26) in das Profilmetallband (22) nach dem Ablängen des geschlossenen Profils (34) ausgeführt wird.

6. Verfahren nach Anspruch 1 oder 2, wobei ein Metallband mit einer Dicke zwischen 0,05 mm und 1 mm und vorzugsweise mit einer Breite zwischen 8 mm und 50 mm als das Berstmetallband (21) verwendet wird.

7. Verfahren nach einem der Ansprüche 1 bis 6, wobei ein Metallband mit einer Dicke zwischen 0,2 mm und 2 mm, vorzugsweise zwischen 0,3 mm und 0,8 mm, und vorzugsweise mit einer Breite von mehr als 100 mm als das Profilmetallband (22) verwendet wird.

8. Verfahren nach Anspruch 6 oder 7, wobei zumindest eines der Metallbänder aus einem Aluminium, einem Stahl oder einem Edelstahl besteht.

9. Verfahren nach einem der Ansprüche 1 bis 8, wobei von der ersten Fügevorrichtung (8) zum stoffschlüssigen Fügen ein Laserschweißverfahren oder ein Klebeverfahren ausgeführt wird.

10. Verfahren nach einem der Ansprüche 1 bis 9, wobei das Einprägen der Sollberststelle auf einer Außenseite durchgeführt wird.

11. Verfahren nach einem der Ansprüche 1 bis 10, wobei der Berstdruck durch eine Tiefe des Einprägens der Sollberststelle (26) eingestellt wird.

12. Verfahren nach einem der Ansprüche 1 bis 11, wobei die Einprägung der Sollberststelle (26) eine Form einer Linie hat,
- wobei sich die Linie an beiden Enden aufgabelt oder
- wobei die Linie eine Form von zwei gleichschenkligen Trapezen (37) hat, wobei die gleichschenkligen Trapeze (37) eine längere Grundseite (38) und eine kürzere Grundseite (39) aufweisen und die kürzeren Grundseiten (39) zusammenfallen oder
- wobei die Linie in ein erstes Segment (40), ein zweites Segment (41), ein drittes Segment (42), ein viertes Segment (43) und ein fünftes Segment (44) unterteilt ist, wobei das erste Segment (40), das dritte Segment (42) und das fünfte Segment (44) gerade und das zweite Segment (41) und das vierte Segment (43) gekrümmt sind, wobei das erste Segment (40) und das fünfte Segment (44) parallel zueinander und einander gegenüberliegend sind, wobei das dritte Segment (42) zwischen dem ersten Segment (40) und dem fünften Segment (44) liegt, wobei das dritte Segment (42) und das erste Segment (40) einen Winkel (45) aufspannen, wobei das dritte Segment (42) und das fünfte Segment (44) diesen Winkel (45) ebenfalls aufspannen und wobei die Enden der Linie frei sind.

13. Verfahren nach einem der Ansprüche 1 bis 12, wobei das geschlossene Profil (2, 34) eine prismatische, vorzugsweise rechteckige, Form aufweist und vorzugsweise eine Breite zwischen 20 mm und 60 mm und eine Höhe zwischen 100 mm und 150 mm aufweist.

14. Verfahren nach einem der Ansprüche 1 bis 13, wobei die Länge des geschlossenen Profils (2, 34) zwischen 200 mm und 1500 mm liegt.

15. Geschlossenes Profil (2, 34), **dadurch gekennzeichnet, dass** das geschlossene Profil (2, 34) nach einem Verfahren gemäß einem der Ansprüche 1 bis 14 hergestellt ist.

16. Dichtes Gehäuse (3) für eine elektrische Zelle, **dadurch gekennzeichnet, dass** das Gehäuse (3) ein geschlossenes Profil (2, 34) gemäß Anspruch 15 aufweist.
